# EUROPEAN PATENT APPLICATION

(11) **EP 4 378 915 A1**
(43) Date of publication of application: **05.06.2024**
(21) Application number: 22210266.7
(22) Date of filing: 29.11.2022
(51) Int. Cl.: C04B 40/00, C04B 103/10

(54) **AQUEOUS SUSPENSIONS OF CALCIUM HYDROXIDE NANOPARTICLES WITH IMPROVED STORAGE STABILITY, THEIR PRODUCTION AND USE**

(71) Applicant: Sika Technology AG, 6340 Baar (CH)
(72) Inventor: WEIDMANN, Jürg, 8404 Winterthur (CH); JUILLAND, Patrick, 3005 Bern (CH); ZIMMERMANN, Jörg, 8400 Winterthur (CH); FRICK, Julia, 8041 Zürich (CH)
(74) Representative: Sika Patent Attorneys

(57) **Abstract**

The invention relates to aqueous suspensions, their production and use as accelerators for minerl binders, the suspensions comprising a) 5 - 65 w%, relative to the total weight of the aqueous suspension, of calcium hydroxide in the form of suspended nanoparticles, b) optionally at least one organic compound for stabilizing the aqueous suspension, and c) at least one salt of alkali metal or alkaline earth metal, preferably at least one of hydroxide, nitrate, nitrite, phosphate, phosphite, sulfate, thiocyanate, carbonate, bicarbonate, silicate, aluminate, formate, acetate, lactate, citrate, tartrate, and/or gluconate of alkali metal or alkaline earth metal.

## Description

### Technical field

The invention relates to an aqueous suspension of calcium hydroxide nanoparticles, to a method for producing it, and to the use of the suspension as an accelerator for mineral binder compositions.

### Background of the invention

Cement is a mineral binder and is used primarily for concrete and mortar. When cement is mixed with water, it sets and hardens in a chemical process, called cement hydration. Cement hydrates formed thereby act as binders for the aggregates in concrete and mortar - typically sand, gravel, and stones - to form a solid material. There are many applications of mortar or concrete in which rapid setting and hardening and thus a rapid development of strength is very important.

There exist various methods to accelerate the setting and/or hardening of cement. An increase in the temperature accelerates the setting and is for example used to make pre-cast concrete elements. Heating is especially difficult or even impossible on outdoor jobsites.

Another possible way of accelerating cement hydration is to add water-soluble salts, such as calcium chloride, calcium nitrite or sodium nitrite and/or amines, such as hydroxyalkylamines. The water-soluble accelerators of the prior art typically have the disadvantage that a mortar or concrete mixture accelerated with them undergoes rapid stiffening, thus rapidly losing workability.

Yet another known way for accelerating the setting of cement is to add fine inorganic powders. However, the handling of powders typically entails dusting, especially if the powder is very fine. The alkaline calcium hydroxide powder can easily cause damage to eyes, airways, and skin of those individuals working with it.

Therefore, WO 2019/180191 discloses aqueous suspensions of calcium hydroxide nanoparticles which are effective as accelerators for mineral binder compositions. These aqueous suspensions can solve many problenms of other known accelerators for mineral binder. However, the aqueous suspensions disclosed therein sometimes have limited storage stability and calcium hydroxide nanoparticles tend to settle.

Consequently there is a need to further improve the storage stability of aqueous suspensions of calcium hydroxide nanoparticles.

### Summary of the invention

It is an objective of the present invention to provide aqueous suspensions of calciumhydroxide nanoparticles that have an improved storage stability. An improved storage stabilitymenas that they can be stored without separation, especially without settlement of calcium hydroxide, for prolonged periods of time. It is also an objective of the present invention to provide methods for the production of aqueous suspensions of calciumhydroxide nanoparticles that have an improved storage stability.

Surprisingly it was found that the addition of salts of alkali metal or alkaline earth metal to the aqueous suspension of calcium hydroxide leads to improved storage stability. It is believed that the addition of salts of alkali metal or alkaline earth metal results in an adjustment of the density of the aqueous suspension of calcium hydroxide which in turn allows to store the resulting suspension for many days or months without significant phase separation.

These and other objectives of the present invention are therefore solved by the subject matter of independent claims.

Preferred embodiments of the invention are the subject matter of dependent claims.

### Ways for carrying out the invention

In a first aspect the present invention relates to an aqueous suspension comprising
a) 5 - 65 w%, relative to the total weight of the aqueous suspension, of calcium hydroxide in the form of suspended nanoparticles,
b) optionally at least one organic compound for stabilizing the aqueous suspension, and
c) at least one salt of alkali metal or alkaline earth metal, preferably at least one of hydroxide, nitrate, nitrite, phosphate, phosphite, sulfate, thiocyanate, carbonate, bicarbonate, silicate, aluminate, formate, acetate, lactate, citrate, tartrate, and/or gluconate of alkali metal or alkaline earth metal.

An "aqueous suspension" in the present context is a suspension of particles in a continuous liquid phase which comprises or essentially consists of water. Specifically, the continuous liquid phase apart from water comprises no other solvents such as alcohols, glycols or ketones, for example. The liquid phase may comprise surfactants.

"Nanoparticles" are particles with a particle size in the nanometer range. These ultrafine particles are notable for a very high specific surface area and consequently for specific properties. "Nanoparticles" in the present document refer to particles which have a particle size of below 1 µm. The particle size of nanoparticles in suspension can be measured by dynamic light scattering with photon cross-correlation spectroscopy according to standard ISO 22412:2017.

Within the present context, the average particle size corresponds in particular to the D50 value (50% of the particles are smaller than the specified value, 50% are correspondingly larger). Accordingly, a value "D10" indicates the particle size at which 10% of the particles are smaller than this value. A value "D90" indicates the particle size at which 90% of the particles are smaller than this value.

According to embodiments, the aqueous suspension of the present invention is characterized in that the calcium hydroxide nanoparticles have a particle size of below 950 nm, preferably from 10 to 800 nm, more preferably from 20 to 500 nm, most preferably from 30 to 400 nm, still more preferably from 40 to 300 nm, especially from 50 to 200 nm, and/or have a D90 of below 800 nm, preferably below 600 nm, more preferably below 400 nm, especially below 200 nm, measured by dynamic light scattering with photon cross-correlation spectroscopy according to standard ISO 22412:2017.

For the present purpose, the particle size of the calcium hydroxide particles has been determined using the Nanophox instrument from Sympatec, Germany. In this case the particle size is determined by dynamic light scattering with photon cross-correlation spectroscopy.

Suspensions which comprise calcium hydroxide particles having particle sizes as defined above are particularly storage-stable and very effective in the acceleration of mineral binder compositions, especially of cementitious compositions.

According to embodiments, at least 50 w%, preferably at least 66 w%, more preferably at least 90 w%, especially essentially all of the calcium hydroxide present in the aqueous suspension is in the form of suspended nanoparticles.

The storage stability of the suspension is determined preferably by centrifuging and measuring the turbidity of the solution, as described in the examples. The more turbid the upper phase after centrifuging, the fewer the number of particles which have settled and the more stable the suspension. The turbidity is determined advantageously with a turbidimeter and reported in NTU. NTU denotes Nephelometric Turbidity Unit. The higher this value, the greater the turbidity of the sample and the more stable the suspension. Advantageously, the aqueous suspension, if it has a calcium hydroxide content of appr. 10 w%, has a turbidity, after the centrifuging of 50 ml of this suspension in a 50 ml centrifuge tube over 15 minutes at 8000 revolutions per minute, and removal of the top 40 ml for the turbidity measurement, of above 3000 NTU, preferably above 4000 NTU, more preferably above 5000 NTU, more particularly above 6000 NTU, especially above 7000 or above 8000 NTU, measured with a HACH^{®} 2100AN turbidimeter.

The aqueous suspension of the present invention optionally comprises at least one organic compound for stabilizing the suspension. It is generally preferable that the aqueous suspension of the present invention comprises at least one organic compound for stabilizing the suspension. The term "stabilizing" in this context refers to an increase in storage stability.

According to embodiments, the at least one organic compound for stabilizing the suspension is an organic polymer comprising carboxylate groups, sulfate groups, sulfonate groups, phosphate groups and/or phosphonate groups.

The organic polymer preferably also acts as a plasticizer for mineral binder compositions, especially for cementitious compositions. Examples of suitable organic polymers include lignosulfonates, sulfonated naphthalene-formaldehyde condensates, sulfonated melamine-formaldehyde condensates, sulfonated vinyl copolymers, poly(meth)acrylic acid, copolymers of (meth)acrylic acid with (meth)acrylic acid esters or hydroxyalkyl (meth)acrylates, polyalkylene glycols having phosphonate groups, polyalkylene glycols having phosphate groups, comb polymers having anionic groups and polyether side chains, or salts thereof, or mixtures of these polymers.

The organic polymer is advantageously stable in the aqueous suspension. Advantageously it has no groups, more particularly no side-chain linkages, which undergo hydrolysis at a high pH, especially a pH above 12.0.

The organic polymer is more particularly a comb polymer comprising a polymer backbone having polyalkylene oxide side chains and anionic groups bonded to the backbone. The side chains here are bonded to the polycarboxylate backbone in particular by way of ester, ether, imide and/or amide groups. The comb polymer preferably comprises polyalkylene oxide units, more particularly polyethylene oxide units.

According to particularly preferred embodiments, the at least one organic compound for stabilizing the suspension is a comb polymer and comprises structural units of the formula I and structural units of the formula II, 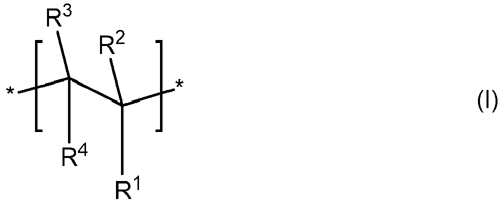 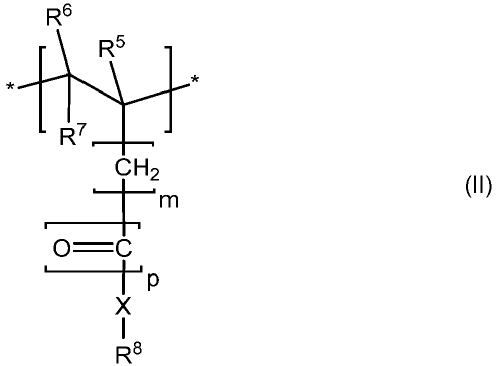 wherein
R¹, in each case independently of one another, is -COOM, -SO₂-OM, -O-PO(OM)₂, -PO(OM)₂, -(CO)-NH-C(CH₃)₂-CH₂-SO₃M, -CH₂-SO₃M, 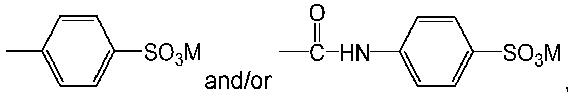
R², in each case independently of one another, is H, -CH₂COOM or an alkyl group having 1 to 5 carbon atoms,
R³, R⁵ and R⁶, in each case independently of one another, are H or an alkyl group having 1 to 5 carbon atoms,
R⁴ and R⁷, in each case independently of one another, are H, -COOM or an alkyl group having 1 to 5 carbon atoms,
M, independently of one another, represents H⁺, an alkali metal ion or an alkaline earth metal ion;
m is 0, 1 or 2,
p is 0 or 1,
X, in each case independently of one another, is -O-, NH- or -NR⁸-,
R⁸ is a group of the formula -[AO]ₙ-R^{a},
where A = C₂ to C₄ alkylene and R^{a} is H or a C₁ to C₂₀ alkyl, cyclohexyl or alkylaryl group, and
n is 1 to 250.

Especially preferred are comb polymers comprising structural unit (I) and structural unit (II) wherein
R¹ is -COOM,
R² and R⁵, in each case independently of one another, are H or CH₃,
R³, R⁶ and R⁷ are H,
R⁴, in each case independently of one another, is H or -COOM,
M, in each case independently of one another, represents H⁺, an alkali metal ion or an alkaline earth metal ion;
m is 0, 1 or 2,
p is 0 or 1,
X, in each case independently of one another, is -O- or -NH-,
R⁸ is a group of the formula -[AO]ₙ-R^{a},
where A = C₂ to C₃ alkylene, preferably C₂ alkylene, and R^{a} is H or C₁ to C₄ alkyl group, and
n is 10 - 200, preferably 22 - 150, more particularly 50 - 120.

Advantageously the comb polymer consists exclusively of structural units (I) and (II). The molar ratio of structural unit (I) to structural unit (II) is preferably 1:1 to 25:1, more preferably 1.5:1 to 23:1, more preferably still 2:1 to 20:1, more particularly 2.3:1 to 18:1.

It may, however, also be advantageous if the comb polymer comprises further structural units (III), with the structural units (III) being different from the structural units (I) and (II). Further structural units preferably are selected from (meth)acrylic acid alkyl esters, hydroxyalkyl (meth)acrylates, N-vinylpyrrolidone, vinyl esters, styrene, monoamides of maleic acid with sulfanilic acid or with alkylamines, especially hydroxyethyl acrylate, and hydroxypropyl acrylate.

Structural units (III) are advantageously present in an amount of 0 to 70 w%, preferably 0.1 to 50 w%, more particularly 0.5 to 40 w% in the comb polymer.

Especially, aqueous supensions of the present invention have lower phase separation and especially lower settlement of calcium hydroxide without the addition of large amounts of organic compounds for stabilization. According to embodiments, the at least one organic compound for stabilizing the suspension is present in 5 to 40 parts per weight, preferably 8 to 35 parts per weight, more preferably 10 to 32 parts per weight, more particularly 11 to 30 parts per weight based on 100 parts per weight of calcium hydroxide.

According to embodiments, the at least one salt of alkali metal or alkaline earth metal is added in an amount which is completely soluble in the aqueous suspension at 23°C and atmospheric pressure or is completely soluble in water with a pH of 12 - 13 at 23°C and atmospheric pressure.

The at least one salt of alkali metal or alkaline earth metal preferably is at least one of hydroxide, nitrate, nitrite, phosphate, phosphite, sulfate, thiocyanate, carbonate, bicarbonate, silicate, aluminate, formate, acetate, lactate, citrate, tartrate, and/or gluconate of alkali metal or alkaline earth metal. Preferably the at least one salt of alkali metal or alkaline earth metal is selected from sodium nitrate, sodium nitrite, sodium thiocyanate, lithium carbonate, sodium carbonate, sodium bicarbonate, sodium silicate, potassium silicate, sodium formate, sodium acetate, sodium lactate, sodium citrate, sodium tartrate, sodium gluconate, and/or calcium silicate hydrate.

According to embodiments, the at least one salt of alkali metal or alkaline earth metal is not calcium hydroxide, calcium nitrate, sodium hydroxide, and/or sodium nitrate.

According to embodiments, the at least one salt of alkali metal or alkaline earth metal, preferably is at least one of hydroxide, nitrate, nitrite, phosphate, phosphite, sulfate, thiocyanate, carbonate, bicarbonate, silicate, aluminate, formate, acetate, lactate, citrate, tartrate, and/or gluconate of alkali metal or alkaline earth metal, especially selected from sodium nitrate, sodium nitrite, sodium thiocyanate, lithium carbonate, sodium carbonate, sodium bicarbonate, sodium silicate, potassium silicate, sodium formate, sodium acetate, sodium lactate, sodium citrate, sodium tartrate, sodium gluconate, and/or calcium silicate hydrate is present in an amount of between 20 - 33 w%, preferably 21 - 27 w%, relative to the total weight of the aqeuous suspension.

It has surprisingly been found that the aqueous suspension of the present invention is particularly stable if it has a content of calcium hydroxide in the form of suspended nanoparticles of 8 - 12 w% and if it has a density measured according to standard DIN EN ISO 15212-1 of between 1.2500 - 1.3200, preferably between 1.2521 - 1.2778, more preferably between 1.2582 - 1.2684.

It has likewise surprisingly been found that the aqueous suspension of the present invention is particularly stable if it has a content of calcium hydroxide in the form of suspended nanoparticles of 13 - 20 w% and if it has a density measured according to standard DIN EN ISO 15212-1 of between 1.3201 - 1.4500.

It has likewise surprisingly been found that the aqueous suspension of the present invention is particularly stable if is has a content of calcium hydroxide in the form of suspended nanoparticles of 21 - 30 w% and that it has a density measured according to standard DIN EN ISO 15212-1 of between 1.4501 - 1.5500.

It has likewise surprisingly been found that the aqueous suspension of the present invention is particularly stable if is has a content of calcium hydroxide in the form of suspended nanoparticles of 31 - 40 w% and that it has a density measured according to standard DIN EN ISO 15212-1 of between 1.5501 - 1.7500.

It has likewise surprisingly been found that the aqueous suspension of the present invention is particularly stable if is has a content of calcium hydroxide in the form of suspended nanoparticles of 41 - 65 w% and that it has a density measured according to standard DIN EN ISO 15212-1 of between 1.7501 - 2.0000.

According to embodiments, the at least one salt of alkali metal or alkaline earth metal is present in a molar ratio of between 1 to 3, preferably between 1.8 to 2.1, relative to the calcium hydroxide.

A particularly suitable aqueous suspension consosts of (in each case relative to the total weight of the aqueous composition
a) 8 to 15 w% of calcium hydroxide in the form of suspended nanoparticles,
b) 0.8 to 5 w% of at least one organic polymer, preferably a comb polymer as described above,
c) 20 to 33 w% of at least one salt of alkali metal or alkaline earth metal, preferably at least one of hydroxide, nitrate, nitrite, phosphate, phosphite, sulfate, thiocyanate, carbonate, bicarbonate, silicate, aluminate, formate, acetate, lactate, citrate, tartrate, and/or gluconate of alkali metal or alkaline earth metal, and
d) the rest water.

Preferably, the aqueous suspension of the present invention contains less than 0.1 w%, preferably less than 0.01 w%, based on the total weight of the suspension, of methanol, ethanol, n-propanol, isopropanol, n-butanol, glycols such as, for example, ethylene glycols, glycerol, ketones and/or of sugar alcohols such as, for example, xylitol, sorbitol and erythritol. Such alcohols have a retarding effect on the setting of mineral binder compositions, especially cementitious compositions, and are therefore less desirable in a setting accelerator.

Thus, the present inventiom also refers to the use of at least one salt of alkali metal or alkaline earth metal to increase the density of an aqueous suspension comprising
a) 5 - 65 w%, relative to the total weight of the aqueous suspension, of calcium hydroxide in the form of suspended nanoparticles, and
b) optionally at least one organic compound for stabilizing the aqueous suspension.

The at least one salt of alkali metal or alkaline earth metal preferably are as described above.

A further subject of the invention is a method for producing an aqueous suspension as described above.

The aqueous suspension is preferably produced by reacting a water-soluble calcium salt with an alkali metal hydroxide. More particularly the water-soluble calcium salt is selected from the group consisting of calcium nitrate, calcium chloride, calcium acetate, calcium formate, calcium thiocyanate, and mixtures thereof. For certain applications it is advantageous if the water-soluble calcium salt is not a chloride. Chlorides promote the corrosion of, for example, reinforcing steel in concrete. The alkali metal hydroxide is preferably sodium hydroxide or potassium hydroxide.

According to embodiments, during reaction, the molar ratio of calcium salt to alkali metal hydroxide is between 0.41 to 0.55, preferably between 0.50 to 0.53.

According to embodiments, the at least one organic compound for stabilizing the aqueous suspension is present during the reaction or is added after the reaction, especially is present during the reaction.

Preferably, the reaction takes place in water or in a mixture of water and a watermiscible solvent such as an alcohol, most preferably in pure water. Alcohols, especially methanol, ethanol, or 2-propanol, are combustible liquids and therefore necessitate explosion-secured devices when producing the suspension, thus increasing costs. Organic solvents, especially alcohols, glycols or ketones, may also retard or even prevent the setting of cementitious binders and therefore are less preferred. Especially preferably, the aqueous suspension is free from organic solvents, especially alcohols, glycols, more particularly ethylene glycol or propylene glycol, or ketones.

It can be preferred to react the water-soluble calcium salt with an alkali metal hydroxide in water with a content of dissolved CO₂.

In some embodiments the reaction is carried out under inert gas or in an atmosphere deplete of CO₂. This reduces the formation of calcium carbonate.

In one aspect the present invention relates to a method of producing an aqueous suspension, said method comprising the steps of
a) providing an aqueous solution **A** comprising a water-soluble calcium salt, preferably calcium nitrate, calcium chloride, calcium acetate, calcium formate, calcium thiocyanate or a mixture thereof,
b) providing an aqueous solution **B** comprising an alkali metal hydroxide, preferably sodium hydroxide, potassium hydroxide, or a mixture thereof,
c) mixing solution **A** and solution **B** rapidly and intensely to obtain an aqueous suspension,
   characterized in that it comprises a further step of
d) dissolving at least one salt of an alkali metal or alkaline earth metal in the aqueous solution **A,** the aqueous solution **B,** and/or the aqueous suspension obtained in step c).

A method of producing an aqueous suspension of the present invention may comprise the steps of
a) providing an aqueous solution **A** comprising a water-soluble calcium salt, preferably calcium nitrate, calcium chloride, calcium acetate, calcium formate, calcium thiocyanate or a mixture thereof,
b) providing an aqueous solution **B** comprising an alkali metal hydroxide, preferably sodium hydroxide, potassium hydroxide, or a mixture thereof,
c) mixing solution **A** and solution **B** rapidly and intensely to obtain an aqueous suspension of a density D1,
   characterized in that said method comprises a further step of
d) dissolving at least one salt of an alkali metal or alkaline earth metal in the aqueous suspension obtained in step c) in an amount effective to increase the density of the aqueous suspension to a density D2 which is higher than the density D1.

Especially preferably, the at least one salt of an alkali metal or alkaline earth metal is selected from the group consisting of hydroxide, nitrate, nitrite, thiocyanate, carbonate, bicarbonate, silicate, aluminate, formate, citrate, tartrate, and/or gluconate of alkali metal or alkaline earth metal, especially from sodium nitrate, sodium nitrite, sodium thiocyanate, sodium carbonate, lithium carbonate, sodium bicarbonate, sodium silicate, sodium formate, and/or calcium silicate hydrate.

According to embodiments, the water-soluble calcium salt and the alkali metal hydroxide are present in step c) in a molar ratio water-soluble calcium salt to alkali metal hydroxide of between 0.41 to 0.55, preferably between 0.50 to 0.53.

According to embodiments, solution **A** has a content of at least 5 w%, preferably at least 15 w%, more preferably at least 20 w%, of calcium salt, and solution **B** has a content of at least 5 w%, preferably at least 10 w%, more preferably at least 18 w%, of alkali metal hydroxide.

The calcium salt present in solution **A** is preferably calcium nitrate, more particularly calcium nitrate tetrahydrate. Calcium nitrate tetrahydrate has particularly high water solubility, which is advantageous for the reaction.

Solution **B** contains preferably sodium hydroxide.

It is especially preferred that in a method of the present invention, the at least one salt of alkali metal or alkaline earth metal is dissolved in the aqueous suspension in an amount effective to adjust the density of the aqueous suspension to a value of between 1.2500 - 1.3200, preferably between 1.2521 - 1.2778, more preferably between 1.2582 - 1.2684, measured according to standard DIN EN ISO 15212-1.

According to embodiments, in a method of the present invention the at least one salt of an alkali metal or alkaline earth metal is present in a molar ratio of between 0.01 to 2.5, preferably between 0.1 to 2.2, relative to the calcium hydroxide.

Preferably solution **A** and solution **B** are metered very rapidly, advantageously under pressure, into the continuous reactor, preferably by means of pumps. The high pressure and the resultant high velocity of the solutions on introduction into the reactor produces an intense swirling of the two solutions and hence a rapid and intense mixing.

"Pressure" within the present context means the pressure difference relative to the ambient external air pressure. A positive pressure thus expresses an increased pressure relative to the ambient air pressure.

According to embodiments, in a method of the present invention, in step c) the two aqueous solutions **A** and **B** are seperately metered under pressure, preferably under pressure of at least 5 bar, into a continuous reactor, wherein the pressure in said continuous reactor is lower than 90%, preferably lower than 50%, more preferably lower than 10%, especially lower than 1% of the pressure of the aqueous solutions **A** and **B** during metering, and where the residence time of the material in the continuous reactor is below 1 minute, preferably below 30 seconds, more preferably below 10 seconds, especially below 1 second.

The continuous reactor is preferably not itself under pressure or has a pressure of not more than 0.5 bar in the reaction compartment.

In preferred embodiments, in a method of the present invention, solution **A** and solution **B** are metered simultaneously into a reaction vessel or a continuous reactor. The manner in which the solutions are metered is preferably such that the molar ratio of calcium salt to alkali metal hydroxide is between 0.41 to 0.55, preferably between 0.50 to 0.53 throughout the metering period.

In particular, the mixing energy with which solution **A** and solution **B** are mixed is not more than 200 kJ, preferably 150 kJ, especially 100 kJ, in particular below 70 kJ, per kilogram of calcium hydroxide suspension produced.

The continuous reactor is preferably a tubular reactor. There may also be static and/or dynamic mixing elements present in the reactor.

A method of the present invention is simple and quick and calcium hydroxide nanoparticles having a narrow particle size distribution are obtained thereby.

The at least one organic compound for stabilizing the suspension, if present, preferably is present in solution **A** and/or solution **B,** especially preferably entirely in solution **A.** The preferred organic compounds for stabilizing the suspension are as described above.

According to embodiments a method of the present invention may further comprise a step of increasing the solids content of the aqueous suspension. In particular a step of removal of water, for example by evaporation.

According to embodiments a method of the present invention may further comprise a step of removing auxiliaries or byproducts from the aqueous suspension. This may be done in particular by means of ion exchange, filtration, or ultrafiltration.

The method of the present invention may additionally comprise a step of discharging the resulting aqueous suspension.

In another aspect the present invention relates to the use of an aqueous suspension as described above or of an aqueous suspension produced by a method as described above as an accelerator for mineral binder compositions, especially for mortar or concrete.

The aqueous suspension is preferably used to accelerate the setting of a mineral binder composition, especially of a cementitious composition. The mineral binder composition may further comprise aggregates.

The mineral binder composition is preferably a mortar or concrete.

An aqueous suspension of the present invention is outstandingly suitable for accelerating the setting of mineral binders, especially of cement, thereby achieving high strengths rapidly, which is very desirable.

An aqueous suspension of the present invention is a suitable accelerator for all common cements, particularly the following cements classified under DIN EN 197-1: Portland cement (CEM I), Portland composite cement (CEM II), blast furnace slag cement (CEM III), pozzolanic cement (CEM IV), and composite cement (CEM V), and also specialty cements such as, for example, calcium aluminate cement or calcium sulfoaluminate cement. An aqueous suspension of the present invention is, of course, also a suitable accelerator for cements produced according to an alternative standard, such as the ASTM standard or the JIS standard.

According to embodiments the aqueous suspension of the present invention is metered to the mineral binder composition in an amount such that the content of calcium hydroxide particles is between 0.05 to 6 w%, preferably between 0.1 to 5 w%, more preferably between 0.2 to 4 w% of, based on the weight of the mineral binder.

An aqueous suspension of the invention shortnes the dormant period and also accelerates the hydration reaction itself. The dormant period being the time between the mixing of cement with water and the onset of the exothermic hydration reaction, also called the start of setting. This is particularly important for applications at relatively low temperature, especially below 20°C or below 15°C, since at a low temperature the dormant period is prolonged and the hydration reaction of cement is severely slowed.

As a result of this acceleration, surprisingly, the good workability of the cementitious composition is not affected and also the slump life is not reduced. This means that a mortar or concrete mixture comprising the aqueous suspension of the present invention, both immediately and after 60 or 90 minutes, has a slump comparable with that of a concrete or mortar mixture without the aqueous suspension and having the same w/c. The w/c here indicates the weight ratio of water to cement.

The cementitious composition preferably further comprises at least one additive, as for example a concrete admixture and/or a mortar admixture. The at least one additive preferably is selected from a defoamer, a wetting agent, a dye, a preservative, a plasticizer, a retarder, another accelerator, a polymer, an air entrainer, a rheological aid, a viscosity modifier, a pumping aid, a shrinkage reducer, a corrosion inhibitor or fibers, or combinations thereof.

Such admixtures are known to the person skilled in the art.

The aqueous suspension of the present invention is added preferably to the mineral binder composition, especially to the cementitious composition, together with the mixing water or after the mixing water.

The suspension is preferably mixed with the composition in a suitable mixing vessel with a mechanical mixer for at least 20 seconds, thoroughly.

This ensures uniform distribution of the calcium hydroxide particles in the mixture and a good, uniform effect as accelerator.

A further subject of the present invention is a mineral binder composition, especially a cementitious binder composition, comprising the aqueous suspension of the invention.

A further subject of the present invention pertains to a shaped article obtainable by curing the mineral binder composition, especially a cementitious binder composition, as described above.

The shaped article is preferably an edifice or part of an edifice, where an edifice may be, for example, a bridge, a building, a tunnel, a trafficway, or a runway.

Further advantageous embodiments of the invention are apparent from the working examples which follow.

### Examples

### Particle size by Nanophox

The particle size of the calcium hydroxide nanoparticles in aqueous suspension was determined by dynamic light scattering with photon cross-correlation spectroscopy. The instrument used for the measurement was the Nanophox from Sympatec GmbH, Germany. Aqueous suspensions were analyzed without further dilution. Prior to the measurement, the sample was homogenized with an ultrasound probe for one minute.

### Turbidity

In a centrifuge (Heraeus^{™} Biofuge Primo R from Thermo Scientific^{™}), fitted with a rotor with fixed angles of 45°, 50 ml of each of the fresh and thoroughly stirred suspensions were introduced into Falcon^{®} centrifuge tubes (50 ml) with screw closure and centrifuged at 8000 revolutions per minute for 15 minutes at 23°C. The top 40 ml were then removed from the centrifuge tube. The turbidity of these 40 ml was determined nephelometrically in accordance with US EPA 180.1. The instrument used for this purpose was a HACH^{®} 2100AN turbidimeter from HACH^{®}, Germany, with a tungsten light source and the unit NTU (Nephelometric Turbidity Unit).

### Storage stability

Storage stability was determined visually. Therefore, a 50 ml sample of aqueous suspension was stored in a tightly closed, transparent sample tube with volumetric gradation at 23 °C. The volume of precipitate was determined after a pre-defined time form production. Less precipitate is a sign for improved storage stability.

### Density

Density was measured according to DIN EN ISO 15212-1.

### Production of aqueous suspensions of calcium hydroxide

A first solution was prepared by dissolving 174.4 g of Ca(NOs)z • 4H₂O (0.739 mol) and 10 g of a comb polymer (copolymer of acrylic acid and polyethylene glycol methacrylate; Mw of the polyethylene glycol: 5000 g/mol) in 82 g of water. A second solution was prepared by dissolving 59.1 g of NaOH (1.478 mol) in 220 g of water. The first solution was charged to a 1 liter round-bottom flask. Under vigorous stirring using a propeller stirrer the second solution was added via a dropping funnel over the course of 5 minutes. The resulting suspension was stirred for a further 60 minutes. The resulting suspension S1 had a content of Ca(OH)₂ in the form of nanoparticles of 10 w%. The turbidity measured as described above was 227 NTU. The particle size D50 measured as described above was 163 nm. The density measured as described above was 1.2521.

The suspension S1 was purified by ultrafiltration using a polyethersulfone membrane having a 30 KDa size exclusion limit. In this procedure, the NaNOs was removed and the suspension was concentrated. Thereafter the suspension was diluted with purified water to a content of Ca(OH)₂ in the form of nanoparticles of 10 w% to give suspension S2.

Alkali metal salts of the type and amount as indicated in below table 1 were added to the suspension S2. The following table 2 shows the storage stability of the aqueous suspensions thus obtained.

**Table 1: Examples 1 - 9: compositions**

| **Example** | **Alkali metal salt** | **Dosage*** | **Molar ratio**** | **Density [g/ml]** |
|---|---|---|---|---|
| **1** | Sodium formate | 24 | 2.51 | 1.2582 |
| **2** | Sodium formate | 25 | 2.72 | 1.2634 |
| **3** | Sodium formate | 33 | 3.59 | 1.3055 |
| **4** | Sodium nitrate | 23 | 2.00 | 1.2521 |
| **5** | Sodium nitrate | 24 | 2.09 | 1.2606 |
| **6** | Sodium nitrate | 25 | 2.18 | 1.2661 |
| **7** | Sodium nitrate | 27 | 2.35 | 1.2778 |
| **8** | Sodium nitrate | 28 | 2.44 | 1.2851 |
| **9** | Sodium nitrate | 33 | 2.88 | 1.3149 |

| | | | | |
|---|---|---|---|---|
| * w% alkali metal salt per weight of suspension ** alkali metal salt to calcium hydroxide *** time to visual phase separation | | | | |

**Table 2: Examples 1 - 9: storage stability**

| **Example** | **Precipitate @ 1d [ml]** | **Precipitate @ 3d [ml]** | **Precipitate @ 7d [ml]** | **Precipitate @ 90d [ml]** |
|---|---|---|---|---|
| **1** | 0 | 0 | 0 | 0.5 |
| **2** | 0 | 0 | 0 | 0.5 |
| **3** | 0.5 | 2 | 3 | 5 |
| **4** | 0 | 2 | 3 | 3 |
| **5** | 0 | 0 | 0 | 0.5 |
| **6** | 0 | 0 | 0 | 0.5 |
| **7** | 0 | 0 | 0 | 1 |
| **8** | 1 | 3 | 3 | 5 |

It can be seen from the above results that within a certain molar ratio of alkali metal salt to calcium hydroxide in the aqueous suspension and/or within a certain density range of the resulting aqueous suspension, the storage stability of the aqueous suspension is increased. If the molar ratio of alkali metal salt to calcium hydroxide in the aqueous suspension is too low or is too high and/or if the density range of the resulting aqueous suspension is too low or is too high, the storage stability is lower.

## Claims

1. An aqueous suspension comprising
a) 5 - 65 w%, relative to the total weight of the aqueous suspension, of calcium hydroxide in the form of suspended nanoparticles,
b) optionally at least one organic compound for stabilizing the aqueous suspension, and
c) at least one salt of alkali metal or alkaline earth metal, preferably at least one of hydroxide, nitrate, nitrite, phosphate, phosphite, sulfate, thiocyanate, carbonate, bicarbonate, silicate, aluminate, formate, acetate, lactate, citrate, tartrate, and/or gluconate of alkali metal or alkaline earth metal, especially selected from sodium nitrate, sodium nitrite, sodium thiocyanate, lithium carbonate, sodium carbonate, sodium bicarbonate, sodium silicate, potassium silicate, sodium formate, sodium acetate, sodium lactate, sodium citrate, sodium tartrate, sodium gluconate, and/or calcium silicate hydrate.

2. The aqueous composition according to claim 1, **characterized in that** is has a content of calcium hydroxide in the form of suspended nanoparticles of 8 - 12 w% and that it has a density measured according to standard DIN EN ISO 15212-1 of between 1.2500 - 1.3200, preferably between 1.2521 - 1.2778, more preferably between 1.2582 - 1.2684.

3. The aqueous composition according to claim 1, **characterized in that** is has a content of calcium hydroxide in the form of suspended nanoparticles of 13 - 20 w% and that it has a density measured according to standard DIN EN ISO 15212-1 of between 1.3201 - 1.4500.

4. The aqueous composition according to claim 1, **characterized in that** is has a content of calcium hydroxide in the form of suspended nanoparticles of 21 - 30 w% and that it has a density measured according to standard DIN EN ISO 15212-1 of between 1.4501 - 1.5500.

5. The aqueous composition according to claim 1, **characterized in that** is has a content of calcium hydroxide in the form of suspended nanoparticles of 31 - 40 w% and that it has a density measured according to standard DIN EN ISO 15212-1 of between 1.5501 - 1.7500.

6. The aqueous suspension according to at least one of the preceding claims, **characterized in that** the calcium hydroxide nanoparticles have a particle size of below 950 nm, preferably from 10 to 800 nm, more preferably from 20 to 500 nm, most preferably from 30 to 400 nm, still more preferably from 40 to 300 nm, especially from 50 to 200 nm, and/or have a D90 of below 800 nm, preferably below 600 nm, more preferably below 400 nm, especially below 200 nm, measured by dynamic light scattering with photon cross-correlation spectroscopy according to standard ISO 22412:2017.

7. The aqueous suspension according to at least one of the preceding claims, **characterized in that** the at least one salt of alkali metal or alkaline earth metal is present in a molar ratio of between 1 to 3, preferably between 1.8 to 2.1, relative to the calcium hydroxide.

8. The aqueous suspension according to at least one of the preceding claims, **characterized in that** the at least one organic compound for stabilizing the suspension is a comb polymer and comprises structural units of the formula I and structural units of the formula II, 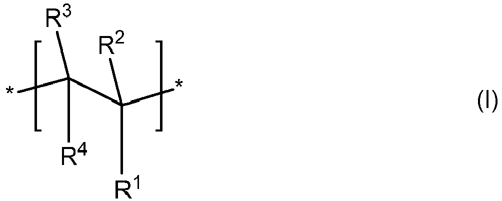 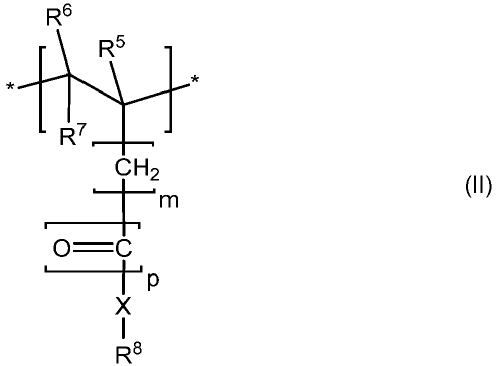 wherein
R¹, in each case independently of one another, is -COOM, -SO₂-OM, -O-PO(OM)₂, -PO(OM)₂, -(CO)-NH-C(CH₃)₂-CH₂-SO₃M, -CH₂-SO₃M, 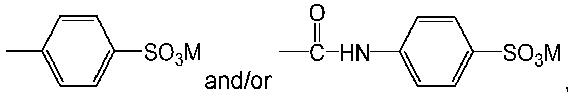
R², in each case independently of one another, is H, -CH₂COOM or an alkyl group having 1 to 5 carbon atoms,
R³, R⁵ and R⁶, in each case independently of one another, are H or an alkyl group having 1 to 5 carbon atoms,
R⁴ and R⁷, in each case independently of one another, are H, -COOM or an alkyl group having 1 to 5 carbon atoms,
M, independently of one another, represents H⁺, an alkali metal ion or an alkaline earth metal ion;
m is 0, 1 or 2,
p is 0 or 1,
X, in each case independently of one another, is -O-, NH- or -NR⁸-,
R⁸ is a group of the formula -[AO]ₙ-R^{a},
where A = C₂ to C₄ alkylene and R^{a} is H or a C₁ to C₂₀ alkyl, cyclohexyl or alkylaryl group, and
n is 1 to 250.

9. A method of producing an aqueous suspension, said method comprising the steps of
a) providing an aqueous solution **A** comprising a water-soluble calcium salt, preferably calcium nitrate, calcium chloride, calcium acetate, calcium formate, calcium thiocyanate or a mixture thereof,
b) providing an aqueous solution **B** comprising an alkali metal hydroxide, preferably sodium hydroxide, potassium hydroxide, or a mixture thereof,
c) mixing solution **A** and solution **B** rapidly and intensely to obtain an aqueous suspension,
**characterized in that** it comprises a further step of
d) dissolving at least one salt of an alkali metal or alkaline earth metal in the aqueous solution **A,** the aqueous solution **B,** and/or the aqueous suspension obtained in step c).

10. The method according to claim 9, **characterized in that** the at least one salt of an alkali metal or alkaline earth metal is dissolved in the aqueous suspension in an amount effective to adjust the density of the aqueous suspension to a value of between 1.2500 - 1.3200, preferably between 1.2521 - 1.2778, more preferably between 1.2582 - 1.2684, measured according to standard DIN EN ISO 15212-1.

11. The method according to at least one of claim 9 or 10, **characterized in that** the water-soluble calcium salt and the alkali metal hydroxide are present in step c) in a molar ratio water-soluble calcium salt to alkali metal hydroxide of between 0.41 to 0.55, preferably between 0.50 to 0.53.

12. The method according to at least one of claims 9 - 11, **characterized in that** in step c) the two aqueous solutions **A** and **B** are seperately metered under pressure, preferably under pressure of at least 5 bar, into a continuous reactor, wherein the pressure in said continuous reactor is lower than 90%, preferably lower than 50%, more preferably lower than 10%, especially lower than 1 % of the pressure of the aqueous solutions **A** and **B** during metering, and where the residence time of the material in the continuous reactor is below 1 minute, preferably below 30 seconds, more preferably below 10 seconds, especially below 1 second.

13. The method according to at least one of claims 9 - 12, **characterized in that** the salt of an alkali metal or alkaline earth metal is selected from the group consisting of hydroxide, nitrate, nitrite, thiocyanate, carbonate, bicarbonate, silicate, aluminate, formate, citrate, tartrate, and/or gluconate of alkali metal or alkaline earth metal, especially from sodium nitrate, sodium nitrite, sodium thiocyanate, sodium carbonate, lithium carbonate, sodium bicarbonate, sodium silicate, sodium formate, and/or calcium silicate hydrate.

14. Use of an aqueous suspension according to at least one of claims 1 - 8 or of an aqueous suspension produced by a method according to at least one of claims 9 - 13 as an accelerator for mineral binder compositions, especially for mortar or concrete.

15. Use of at least one salt of alkali metal or alkaline earth metal, preferably selected from the group consisting of hydroxide, nitrate, nitrite, thiocyanate, carbonate, bicarbonate, silicate, aluminate, formate, citrate, gluconate, and/or tartrate of alkali metal or alkaline earth metal, especially selected from sodium nitrate, sodium nitrite, sodium thiocyanate, sodium carbonate, lithium carbonate, sodium bicarbonate, sodium silicate, sodium formate, and/or calcium silicate hydrate, to increase the density of an aqueous suspension comprising
a) 5 - 65 w%, relative to the total weight of the aqueous suspension, of calcium hydroxide in the form of suspended nanoparticles, and
b) optionally at least one organic compound for stabilizing the aqueous suspension.
